**Europäisches Patentamt**

**European Patent Office**

**Office européen des brevets**

(11) Veröffentlichungsnummer: **0 098 331**
**B1**

(12) **EUROPÄISCHE PATENTSCHRIFT**

(45) Veröffentlichungstag der Patentschrift:
**15.01.86**

(21) Anmeldenummer: **82110747.1**

(22) Anmeldetag: **20.11.82**

(51) Int. Cl.⁴: **B 60 K 5/12,** F 16 F 13/00

(54) **Elastisches Gummilager.**

(30) Priorität: **09.07.82 DE 3225700**

(43) Veröffentlichungstag der Anmeldung:
**18.01.84 Patentblatt 84/3**

(45) Bekanntmachung des Hinweises auf die Patenterteilung:
**15.01.86 Patentblatt 86/3**

(84) Benannte Vertragsstaaten:
**DE FR GB IT**

(56) Entgegenhaltungen:
**EP-A-0 005 730**
**EP-A-0 006 819**
**DE-A-2 727 244**
**DE-A-3 019 337**

(73) Patentinhaber: **Firma Carl Freudenberg, Höhnerweg 2, D-6940 Weinheim/Bergstrasse (DE)**

(72) Erfinder: **Hamaekers, Arno, Brunhildstrasse 27, D-6944 Hemsbach (DE)**

(74) Vertreter: **Weissenfeld- Richters, Helga, Dr., Höhnerweg 2, D-6940 Weinheim/Bergstrasse (DE)**

EP 0 098 331 B1

## Beschreibung

Die Erfindung betrifft ein elastisches Gummilager, bei dem eine Lagerplatte, ein ringförmig ausgebildetes Federelement und eine Bodenplatte einen mit einer hydraulischen Flüssigkeit gefüllten Arbeitsraum umschließen, der durch eine bei einem bestimmten Druck optimal druchströmte Drosselöffnung mit einem volumenveränderlichen, flüssigkeitsgefüllten Ausgleichsraum verbunden ist und bei dem zwischen beiden Räumen eine zwischen Gittern unabhängig voneinander bewegliche Teilbereiche aufweisende Trennwand aus einem weichelastischen Werkstoff vorgesehen ist.

Auf ein Gummilager dieser Art nimmt DE-A-27 27 244 Bezug. Dieses enthält eine ebene, kreisförmig ausgebildete Trennwand aus einem gummielastischen Werkstoff, die eine zentrisch angeordnete Drosselöffnung aufweist sowie einen radialen Abstand von der in der Bodenplatte enthaltenen Aussparung. Letzterer hat einen erheblich größeren Querschnitt als die Drosselöffnung, und durch diese wird infolgedessen nur dann Flüssigkeit hindurchgepreßt, wenn die Trennwand flächig an einem der beiden Anschlagsgitter zur Anlage kommt. Die zunächst vorhandene, gute Isolierwirkung in bezug auf eingeleitete Schwingungen schlägt in diesem Falle spontan um in eine hohe Dämpfungswirkung, wie beispielsweise für die Unterdrückung der Stuckerbewegungen eines Verbrennungsmotors erwünscht. Eine große Geräuschentwicklung des Gummilagers selbst muß hierfür allerdings in Kauf genommen werden.

Bei der Ausführung nach den Figuren 20/21 der DE-A-27 27 244 ist die flexible Trennwand in auf dem Umfang verteilten, bohnenförmig begrenzten. Bereichen axial verdickt, um die beiden Betriebszustände einer guten Isolierwirkung und einer guten Dämpfungswirkung gleichmäßiger ineinander übergehen zu lassen. Dabei muß jedoch eine starke Walkbeanspruchung der aus einem gummielastischen Werkstoff bestehenden Trennwand in Kauf genommen werden, die zu einer baldigen Zerstörung führt. Außerdem wird das angestrebte Ziel, nämlich die Verbesserung des Komforts, nur in einem unbefriedigenden Maße erreicht. Eine Drucksteigerung in einem der beiden Räume führt zu einer Verminderung des zur Verfügung stehenden Drosselquerschnittes und damit zu einer Verhärtung des Gummilagers. Eine schlechte Isolierwirkung ist hiervon die Folge.

Der Erfindung liegt die Aufgabe zugrunde, ein hydraulisch gedämpftes Gummilager zu entwickeln, insbesondere für die Lagerung eines Verbrennungsmotors in einem Kraftfahrzeug das sich bei einer stark reduzierten Geräuschentwicklung und einer wesentlich vergrößerten Gebrauchsdauer durch eine gute Wirksamkeit auszeichnet sowohl hinsichtlich der Bedämpfung niederfrequenter Schwingungen als auch hinsichtlich der Isolierung hochfrequenter Schwingungen ab ca. 30 Hz.

Diese Aufgabe wird erfindungsgemäß dadurch gelöst, daß die Trennwand nicht oder nicht in einen nennenswerten Maße umströmbar ist, daß eine Durchbrechung aus wenigstens einem die Trennwand ohne oder mit minimaler Werkstoffentnahme durchtrennenden Schnitt vorgesehen ist und daß der Schnitt so bemessen ist, daß bei Überschreiten eines bestimmten Druckes eine diesen stabilisierende, elastische Aufweitung zu einem Spalt resultiert.

Die Trennwand besteht vorzugsweise aus einer Folie aus einem weichelastischen Werkstoff, beispielsweise aus Gummi mit einer Härte Shore A von ca. 40 bis 65. Die Dicke beträgt bevorzugt 0,2 bis 5 mm, wobei eine gegebenenfalls vorhandene, reliefartige Strukturierung beider Oberflächen bereits einbezogen ist. Sofern vorhanden, hat die Strukturierung nur eine sehr geringe Tiefe von beispielsweise 0,2 bis 1,0 mm, und sie kann aus einen Abstand voneinander aufweisenden oder ineinander übergehenden Noppen und/oder Rippen bestehen, die aus dem Werkstoff der Folie herausgeformt sind und dem Zwecke dienen, den Aufschlag bei einer Berührung der Gitter zu dämpfen und zugleich die Ablösung bei Bewegungsumkehr zu erleichtern.

Die Trennwand ist in Anpassung an die gebräuchlichsten Gummilager kreisförmig begrenzt und sie wird mit geringem Spiel und leicht beweglich in einer zylindrischen Bohrung der Bodenplatte geführt, die sich parallel zur Richtung der eingeleiteten Schwingungen erstreckt. Leckflüssigkeit vermag die Trennwand im Bereich des so gebildeten Spaltes nicht in nennenswertem Maße zu passieren.

Es ist auch möglich, die Trennwand durch ein membranartig ausgebildetes Übergangsstück axial beweglich mit der zylindrischen Aussparung der Bodenplatte zu verbinden.

Wegen der notwendigen Stabilität des membranartigen Übergangsstückes kann dabei jedoch eine gewisse Mindestdicke nicht unterschritten werden, was sich insbesondere bei kleinen Ausführungen nachteilig auf die leichte Beweglichkeit und damit auf das Betriebsverhalten des Gummilagers auswirkt. Für leichte Ausführungen, wie beispielsweise für die Ausstattung von Kraftfahrzeugen benötigt, wird deshalb die Ausführung mit einer "schwebenden" Trennwand bevorzugt. Eine solche Ausführung läßt sich außerdem kostengünstiger herstellen, beispielsweise durch Ausstanzen aus einer breiten Bahnenware oder Folie.

Die den Arbeitsraum mit dem Ausgleichsraum verbindende Drosselöffnung kann die Trennwand und/oder die Bodenplatte durchbrechen. Ein funktioneller ünterschied besteht grundsätzlich nicht. Die steife und kompakte Ausbildung der Bodenplatte ermöglicht jedoch eine bessere Präzisierung der Details der Drosselöffnung, beispielsweise die Einstellung präziser Maßverhältnisse zwischen Durchmesser und Länge der Drosselöffnung, was von wesentlicher Bedeutung ist in bezug auf die Erzielung eines definierten Dämpfungs- und Isolierverhaltens.

Die Trennwand ist durch wenigstens einen sie ohne oder nur mit minimaler Werkstoffentnahme erzeugten Schnitt in Teilbereiche unterteilt. Die Teilbereiche können eine unterschiedliche Größe haben und bei Verwendung eines Werkstoffes mit von der Wichte der Flüssigkeit abweichendem Raumgewicht resultiert ein unterschiedliches Bewegungsverhalten, was die Vermeidung von Druckspitzen begünstigt. Das Verhältnis aus der Größe der beiderseits des Schnittes einander gegenüberliegenden Flächenbereiche soll 1,1 bis 6 betragen. Innerhalb dieses Bereiches werden sowohl eine optimale Geräuschminderung als auch eine optimale Dauerhaftigkeit erzielt.

Während das Gewicht der einzelnen Teilbereiche, jeweils für sich betrachtet, mit abnehmender Größe in dritter Potenz sinkt, geht die zugehörige druckbeaufschlagte Fläche lediglich in der zweiten Potenz zurück. Die einzelnen Teilbereiche werden dadurch bei einer gleichmäßigen Druckbeaufschlagung der gesamten Trennwand unterschiedlich stark beschleunigt, was sich positiv sowohl auf die Vermeidung von Kavitationserscheinungen und damit auf die Gebrauchsdauer des Gummilagers auswirkt als auch auf die Verminderung des Betriebsgeräusches bei niedrigen Frequenzen.

Bei Einleitung von Schwingungen mit einer großen Amplitude und einer niedrigen Frequenz vergrößert sich mit zunehmender Frequenz der auf die Trennwand einwirkende Druck. Dieser Drucksteigerung entgegen wirkt jedoch der zunehmende Übertritt von Flüssigkeit durch die Drosselöffnung, der bei Erreichen eines bestimmten Druckes sein Optimum erreicht. Danach tritt bei der Ausführung nach der DE-A-27 27 244 ein Abfall ein, was bei der erfindungsgemäßen Ausführung durch den sich zu einem Schlitz öffnenden Schnitt kompensiert wird. Der Drosselquerschnitt erfährt insofern eine stetige Erweiterung in Abhängigkeit von der zur Verfügung stehenden Druckdifferenz zwischen dem Arbeits- und dem Ausgleichsraum. Hieraus resultiert eine deutliche Erweiterung des Frequenz- und Amplitudenbereiches, in dem eine gute Dämpfungswirkung erzielt wird unter Vermeidung der bekannten elastischen Verhärtung, die bei Ausführungen mit konstantem Querschnitt der Drosselöffnung störend in Erscheinung tritt. Stuckerbewegungen eines Motors beim Überfahren von Bodenunebenheiten können hierdurch wirksam unterdrückt werden. Das vorgeschlagene Gummilager eignet sich daher besonders gut für die Lagerung eines Verbrennungsmotors in einem Kraftfahrzeug.

Die Gitter sind parallel zur Oberfläche der Trennwand angeordnet, und das Verhältnis aus ihrem gegenseitigen Abstand und der Dicke der Trennwand beträgt vorzugsweise 1,2 bis 1,8.

Unerwünscht große Endgeschwindigkeiten werden durch die Einhaltung dieses Verhältnisses ebenso vermieden wie die Gefahr einer gegenseitigen Verkantung von Teilbereichen der Trennwand bei extrem unterschiedlichen Verschiebungen.

Die Gitter können symmetrisch oder unsymmetrisch ausgebildet und der Trennwand spiegelbildlich oder versetzt zugeordnet sein.

Im gleichen Sinne ist die Verwendung einer Trennwand möglich, die senkrecht durch einen geraden oder auch modifizierten Schnitt durchtrennt ist. Unter letzterem ist eine gleich- oder ungleichförmig gekrümmte, eine abgeknickte oder eine sich schräg zur Oberfläche erstreckende Ausführungsform zu verstehen sowie eine unsymmetrische Zuordnung zu der Aussparung, was ebenso wie die Verwendung von Gittern mit unterschiedlich großen Aussparungen eine unterschiedliche Durchlässigkeit in beiden Richtungen ergibt. Die genannte Wirkung läßt sich durch die Kombination von mehreren der genannten Merkmale wesentlich steigern. Es können auch mehrere, gegebenenfalls unterschiedlich ausgebildete Schnitte einander musterartig zugeordnet werden, wobei das so erhaltene Muster aus parallel zueinander verlaufenden Schnitten besteht, die einen gegenseitigen Abstand haben, der mindestens so groß ist wie die Dicke der Trennwand. Eine entsprechende Ausführung läßt sich am einfachsten erhalten durch einfaches Ausstanzen aus einem Bahnenmaterial mit ebener oder reliefartig profilierter Oberfläche aus elastischem Gummi oder Kunststoff, das von entsprechend angeordneten Schnitten durchdrungen ist. Die ausgestanzte Scheibe wird so zwischen den Gittern gelagert, daß mindestens einer Gitteröffnung wenigstens ein Schnitt zugeordnet ist. Bei Verwendung von Gittern aus Gitterstäben mit einer Breite von weniger als der zweifachen Dicke der Trennwand ist eine so spezielle Zuordnung entbehrlich.

Der Schnitt kann parallel zum ümfang der Trennwand verlaufen, und die einzelnen Teilbereiche liegen in diesem Falle bei einer kreisförmigen Ausführung konzentrisch ineinander. Sie können durch schmale Stege verbunden sein, was die Betriebssicherheit und die Montage wesentlich erleichtert.

Die Länge des Schnittes ist nach unten durch einen Wert begrenzt, der der dreifachen Dicke der Trennwand entspricht. Sie ist nach oben nicht begrenzt, solange gewährleistet ist, daß sich die beim Ausbauchen der Trennwand oberhalb des Grenzdruckes voneinander entfernenden, den Schnitt begrenzenden Flächen bei einer Richtungsumkehr wieder in die ursprüngliche Position zurückbewegen. Bei einer Länge bis zu maximal der 20 fachen Dicke der Trennwand ist das in aller Regel der Fall. Größere Verhältnisse erfordern eine Einzelüberprüfung der Funktionssicherheit. Sie haben auf den erzielten Drosseleffekt keinen Einfluß, weil dieser ausschließlich eine Frage des Öffnungsquerschnittes ist, und damit des anstehenden hydraulischen Druckes. Unterschiedliche Längengleichen sich insofern selbsttätig durch eine unterschiedliche Aufweitung des Schlitzes aus.

Geradlinig geführte Schnitte lassen sich häufig wesentlich leichter anbringen, und eine gegebenenfalls spiralig geführte Ausführung ist möglich. Auch in diesen Fällen können die einander gegenüberliegenden Teilbereiche aus den vorgenannten Gründen durch schmale Stege verbunden sein.

Der Gegenstand der vorliegenden Erfindung wird nachfolgend anhand der in der Anlage beigefügten Zeichnungen näher erläutert. Es zeigen:

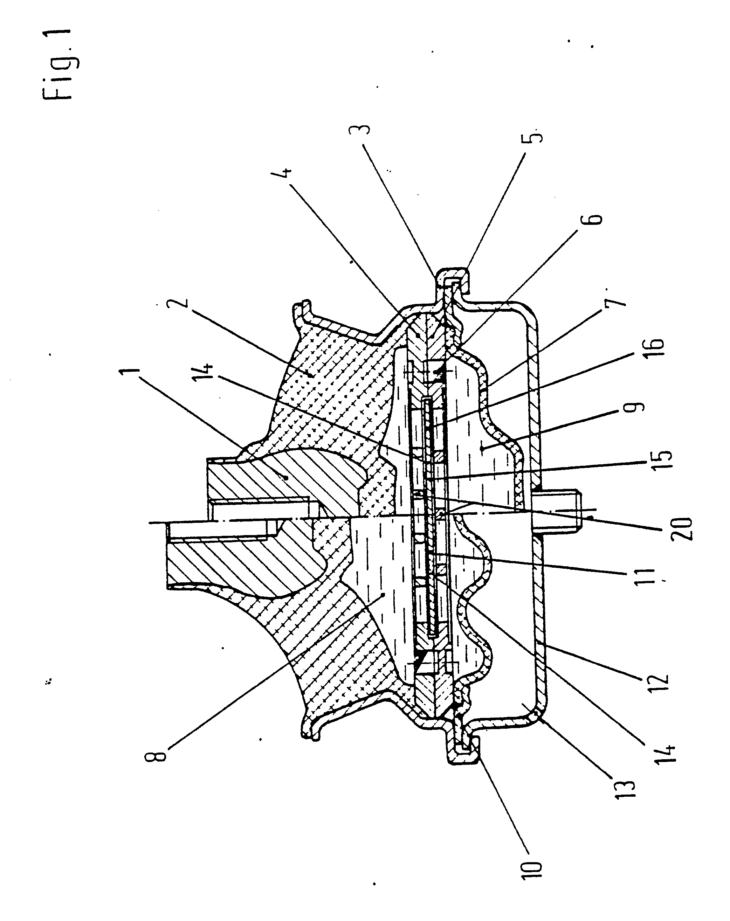

Figur 1 ein Gummilager, bei dem der Ausgleichsraum durch eine Rollmembrane begrenzt ist und bei dem die Drosselöffnung in der Bodenplatte angeordnet ist.

Figuren 2 bis 6

Trennwände zur Verwendung in einem Gummilager entsprechend Figur 1.

Figur 7 ein Gummilager ähnlich Figur 1, wobei die Drosselöffnung die Trennwand selbst durchdringt und wobei der Ausgleichsraum durch einen Federring begrenzt wird.

Figur 8 ein Gummilager, bei dem das den Arbeitsraum begrenzende Federelement und der den Ausgleichsraum begrenzende Federring durch einen die Lagerplatte und die Bodenhülse verbindenden Bolzen parallel geschaltet sind.

Das Gummilager gemäß Figur 1 besteht aus einer Bodenplatte 3, die durch das einvulkanisierte, kegelförmig ausgebildete Federelement 2 mit der Lagerplatte 1 verbunden ist. Die Bodenplatte 3 besteht aus einem tiefgezogenen Blechteil, welches im unteren Teil die Drosselscheiben 4 und 5 umschließt, einschließlich Klemmplatte 10 und der Bodenkappe 12. Die Gitteröffnungen in der Drosselscheibe 4 haben einen Durchmesser von B mm, die Gitteröffnungen in der Drosselscheibe 5 einen solchen von 12 mm. Sämtlich Teile sind durch eine Umbördelung der Bodenplatte starr verbunden.

Die Drosselscheiben 4 und 5 enthalten jeweils einen Teil des Querschnittes der spiralig ausgeführten Drosselöffnung, die den Arbeitsraum 8 und den Ausgleichsraum 9 verbindet. Durch eine gegenseitige Verdrehung der beiden Drosselscheiben 4 und 5 kann die Länge der Drosselöffnung auf ein ganz bestimmtes Maß eingestellt werden. Beide Drosselscheiben bestehen aus Zinkspritzguß und sie zeichnen sich durch eine große Maßhaltigkeit aus.

Die Drosselscheiben enthalten im mittleren Bereich eine zylindrische Aussparung, in der die Trennwand 11 ohne ein wesentliches radiales Spiel gelagert ist. Die axiale Beweglichkeit der Trennwand wird durch Gitter 20 begrenzt. Diese haben einen gegenseitigen Abstand von 2,1 mm bei einer Dicke der Trennwand von 1,5 mm.

Sämtliche Kanten sind gerundet.

Der Lochdurchmesser der Trennwand beträgt bei einem Offenflächenanteil von 53 % ca. 7 mm. Die Trennwand ist oberflächlich genoppt. Sie besteht aus Weichgummi mit einer Härte Shore A von 45. Der Durchmesser beträgt 43 mm.

Die Trennwand ist durch einen, parallel zum Außenumfang verlaufenden, sie senkrecht durchtrennenden Schnitt in einen innenliegenden Teilbereich 15 und einen außenliegenden Teilbereich 16 unterteilt. Der auf zwei einander gegenüberliegenden Seiten durch schmale Stege unterbrochene Schnitt 14 hat einen Durchmesser von 32 mm, woraus ein Größenverhältnis der an den Schnitt angrenzenden Flächenbereiche von 1,24 resultiert.

Durch die Klemmplatte 10 wird ein Rollbalg 7 zugleich festgelegt und abgedichtet. Dieser besteht aus einer vorgeformten Gummifolie, die so dimensioniert ist, daß der Bodenbereich bei ruhender Belastung eine mittlere Lage einnimmt und bei extremer Ein- bzw. Ausfederung der Lagerplatte 1 die beiderseits der Mittellinie dargestellten, extremen Stellungen. Es können somit weder die Bodenkappe 12 noch die Drosselscheibe 5 von dem sich unter Betriebsbedingungen bewegenden Rollbalg 7 berührt werden.

Die Bodenkappe 12 weist eine Entlüftungsöffnung 13 auf, durch die Luft beim Einfedern der Lagerplatte 1 entweichen kann. Der Ausgleichsraum 9 ist dadurch unter Betriebsbedingungen stets frei von Oberdrücken.

Das dargestellte Gummilager dient der Lagerung eines Verbrennungsmotors. Dieser wird mit der Lagerplatte 1 verschraubt, das Gummilager 12 über den an der Bodenkappe 12 befindlichen Gewindebolzen mit der im Einzelfalle vorhandenen Tragkonstruktion, beispielsweise der Karosserie eines Kraftfahrzeuges.

Bei stärkeren Motorschwingungen, wie beispielsweise durch das Oberfahren von Bodenunebenheiten verursacht, kommt es zu einer starken Ein- und Ausfederung der Lagerplatte 1, und in diesem. Zusammenhang durch ein wechselseitiges Anlegen der Trennwand an die die Bewegung beidseitig begrenzenden Gitter der Drosselscheiben 4 und 5. Das aus dem Arbeitsraum 8 verdrängte Flüssigkeitsvolumen durchströmt in diesem Falle die Drosselöffnung 6 und zunehmend die Trennwand durch den sich zu einem Spalt erweiternden Schnitt 14. Die dabei erzielte, breitbandige Dämpfungswirkung verhindert ein Aufschaukeln des Motors in sich selbst und damit die Entstehung als unangenehm empfundener Schwingungen. Es konnten weder störende Geräusche noch Kavitationserscheinungen nachgewiesen werden.

Beim Auftreten von Motorschwingungen einer hohen Frequenz und einer kleinen Amplitude vermindert sich das die Drosselöffnung 6 und die Trennwand durch den sich verengenden Schnitt passierende Flüssigkeitsvolumen. Parallel hierzu kommt es zu einer Verminderung der Drosselwirkung und es resultiert eine zunehmende Abkopplung des schwingenden Motors von der Bodenplatte, d.h. eine gute Schwingungsisolierung. Beispielsweise Dröhnschwingungen, die bei hohen Motordrehzahlen auftreten, können nicht mehr auf die Karosserie übertragen werden. Störende Geräusche oder Kavitationserscheinungen wurden auch in diesem Falle in dem mit einer üblichen hydraulischen Flüssigkeit gefüllten Motorlager nicht beobachtet. Auch in dem Zwischenbereich zwischen den vorstehend skizzierten, extremen Betriebszuständen treten nachteilige Wirkungen nicht ein.

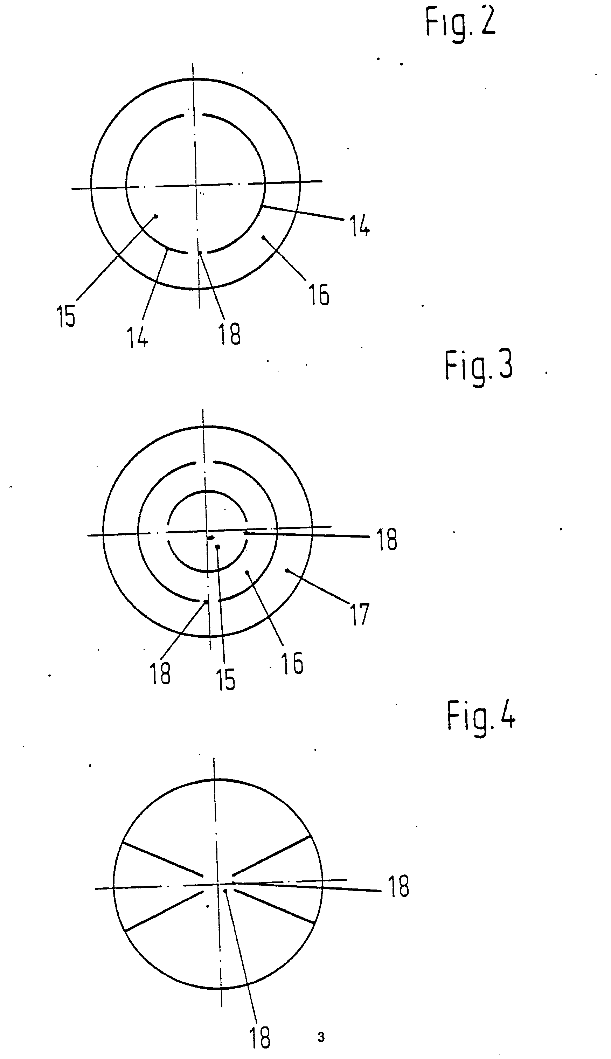

Die in einem Gummilager gemäß Figur 1 verwendete Trennwand ist in Figur 2 in der Draufsicht wiedergegeben. Der Schnitt 14 erstreckt sich parallel zum Außenumfang der Trennwand, und er ist auf einander gegenüberliegenden Seiten durch einen schmalen Steg 18 unterbrochen, dessen Breite etwa der dreifachen Dicke der Trennwand entspricht. Das Verhältnis aus der Fläche des größeren Teilbereiches 16 und des kleineren Teilbereiches 15 beträgt 1:24.

Figur 3 entspricht im wesentlichen Figur 2, wobei jedoch durch zwei konzentrisch ineinanderliegende Scnnitte eine dreifache Unterteilung in die Teilbereiche 15, 16 und 17 vorgenommen worden ist. Die einen jeden Schnitt auf einander gegenüberliegenden Seiten der Trennwand unterbrechenden Stege 18 sind den Stegen des nächstfolgenden Schnittes unter einem Winkel von 90° zugeordnet.

Figur 4 zeigt eine Ausführung, bei der vier Einzelschnitte am Außenumfang beginnend in radialer Richtung nach innen erstrecken. Die Schnitte unterteilen die Trennwand in unterschiedlich große Teilbereiche.

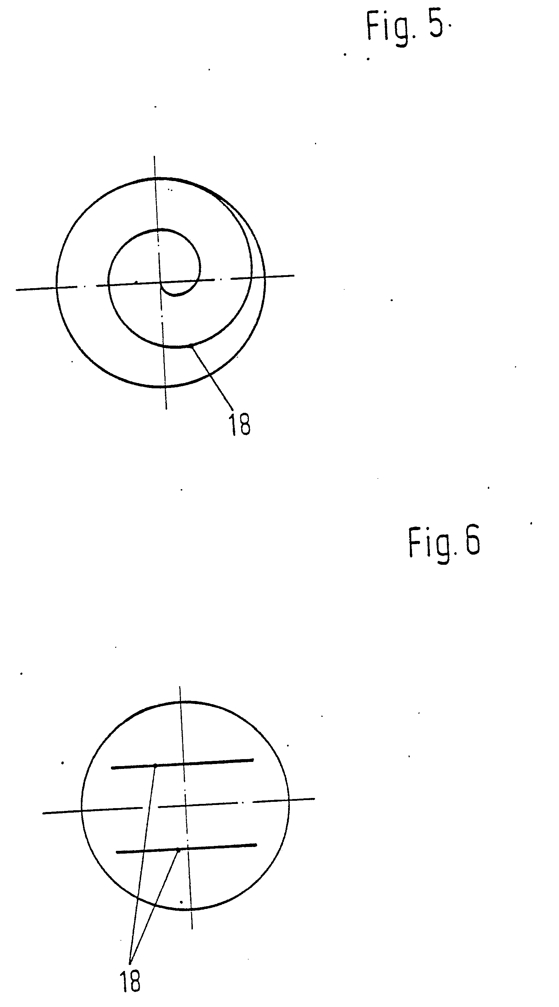

Figur 5 zeigt eine Ausführung bei der die kreisförmig begrenzte Trennwand durch einen spiralig ausgeführten Schnitt 18 in Teilbereiche einer unterschiedlichen Größe zerlegt ist, Figur 6 eine Ausführung, bei der zwei, dem selben Zwecke dienende, sich parallel zueinander erstreckende, geradlinig geführte Schnitte 18 den Umfang nicht erreichen. Auch in diesem Falle haben die beiderseits des Schnittes einander gegenüberliegenden Teilbereiche eine unterschiedliche Größe.

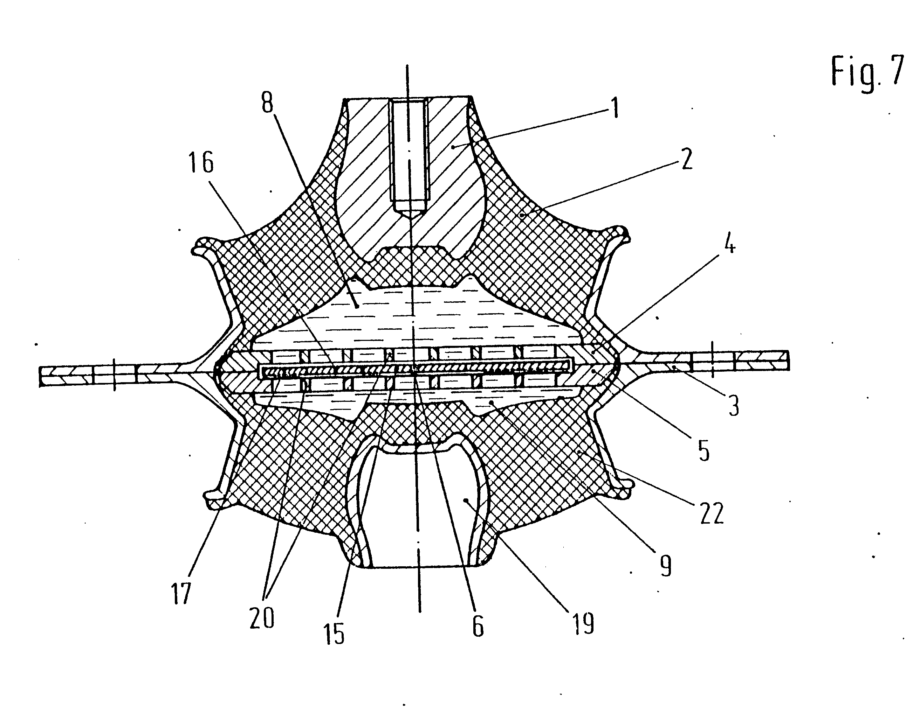

Figur 7 zeigt eine Ausführung ähnlich Figur 1, wobei jedoch die Drosselöffnung 6 nicht in den Drosselscheiben 4, 5 angeordnet ist, sondern in der Trennwand 11. Sie hat eine zylindrische Gestalt und einen Durchmesser von 7 mm.

Die Trennwand ist entsprechend Figur 3 durch zwei konzentrisch ineinanderliegende Schnitte in drei verschiedene Teilbereiche 15, 16 und 17 unterteilt. Das Größenverhältnis zwischen den Teilbereichen beträgt im ersten Falle 1,4, im zweiten Falle 1,5.

Der Ausgleichsraum 9 ist entgegen der Ausführung nach Figur 1 elastisch vorgespannt durch einen Federring 22. Dieser ist ähnlich Figur 2 ausgebildet und durch Vulkanisation mit dem Bodenteil 3 und der Bodenhülse 19 fest verbunden. Die Detailausbildung wurde auch in diesem Falle so vorgenommen, daß bei extremer Einfederung der Lagerplatte 1 bzw. der Bodenhülse 19 eine Berührung der Drosselscheiben 4, 5 so gut wie ausgeschlossen ist.

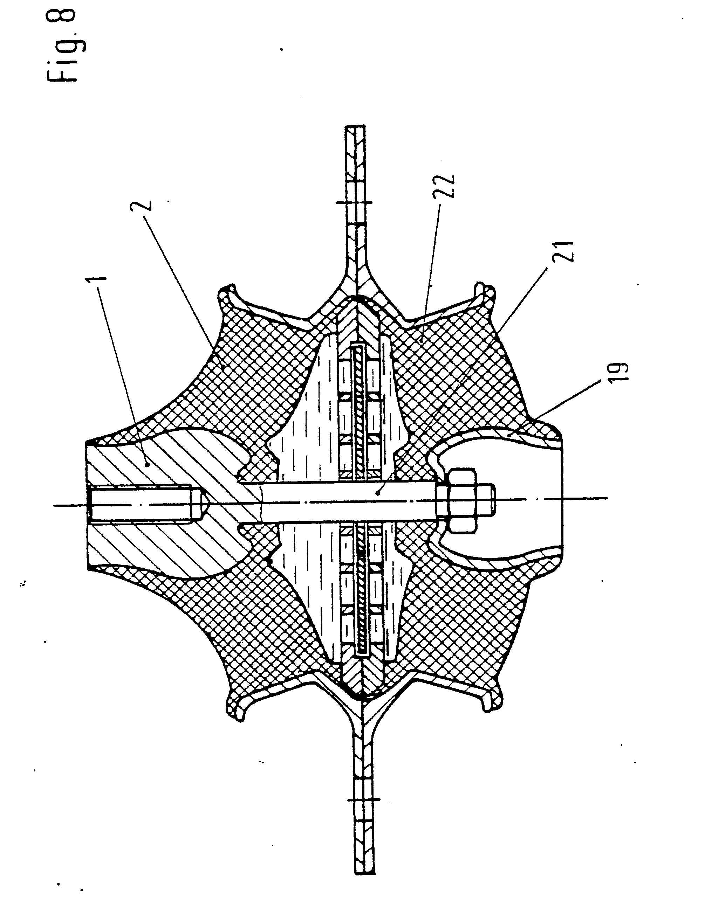

Figur 8 zeigt eine Ausführung ähnlich Figur 7, wobei jedoch die Bodenhülse 19 und die Lagerplatte 1 durch einen Bolzen 21 starr verbunden sind. Der Ausgleichsraum ist dadurch dem Arbeitsraum in seiner Wirkung parallel geschaltet, was eine entsprechende Ausführung besonders geeignet macht für Anwendungsfälle, in denen eine einseitig gerichtete Vorbelastung nicht vorhanden ist, wie beispielsweise bei der seitlichen Abstützung eines schwingenden Gerätes. Die Drosselöffnung wird durch den Spalt zwischen der Trennwand und dem Umfang des Bolzens 21 gebildet.

Bezugszeichenliste
1 Lagerplatte
2 Federelement
3 Bodenplatte
4 Drosselscheibe
5 Drosselscheibe
6 Drosselöffnung
7 Rollbalg
8 Arbeitsraum
9 Ausgleichsraum
10 Klemmplatte
11 Trennwand
12 Bodenkappe
13 Entlüftungsöffnung
14 Schnitt
15 Teilbereich 1
16 Teilbereich 2
17 Teilbereich 3
18 Steg
19 Bodenhülse
20 Gitter
21 Bolzen
22 Federring

**Patentansprüche**

1. Elastisches Gummilager, bei dem eine Lagerplatte (1), ein ringförmig ausgebildetes Federelement und eine Bodenplatte (3) einen mit einer hydraulischen Flüssigkeit gefüllten Arbeitsraum (8) umschließen, der durch eine bei einem bestimmten Druck optimal durchströmte Drosselöffnung (6) mit einem volumenveränderlichen, flüssigkeitsgefüllten Ausgleichsraum (9) verbunden ist und bei dem zwischen den beiden Räumen eine zwischen Gittern (20) unabhängig voneinander bewegliche Teilbereiche aufweisende Trennwand (11) aus einem weichelastischen Werkstoff vorgesehen ist, dadurch gekennzeichnet, daß die Trennwand (11) nicht oder nicht in nennenswertem Maße umströmbar ist, daß eine Durchbrechung aus wenigstens einem die Trennwand ohne oder mit minimaler Werkstoffentnahme durchtrennenden Schnitt (14) vorgesehen ist und daß der Schnitt so bemessen ist, daß bei Überschreiten des bestimmten Druckes eine diesen stabilisierende, elastische Aufweitung zu einem Spalt resultiert.

2. Gummilager nach Anspruch 1, dadurch gekennzeichnet, daß der Schnitt parallel zum Umfang der Trennwand verläuft.

3. Gummilager nach Anspruch 1, dadurch gekennzeichnet, daß der Schnitt geradlinig geführt ist.

4. Gummilager nach Anspruch 1, dadurch gekennzeichnet, daß der Schnitt spiralig geführt ist.

5. Gummilager nach Anspruch 1 bis 4, dadurch gekennzeichnet, daß das Verhältnis aus der Größe der beiderseits des Schnittes einander gegenüberliegend en Flächenbereiche 1,1 bis 6 beträgt.

6. Gummilager nach Anspruch 1 bis 5, dadurch gekennzeichnet, daß das Verhältnis aus dem gegenseitigen Abstand der Gitter und der Dicke der Trennwand 1,2 bis 1,8 beträgt.

7. Gummilager nach Anspruch 1 bis 6, dadurch gekennzeichnet, daß der Schnitt überwiegend den Gitteröffnungen zugeordnet ist.

8. Gummileger nach Anspruch 1 bis 7, dadurch gekennzeichnet, daß die Gitteröffnungen beider Gitter unterschiedlich groß sind.

9. Gummilager nach Anspruch 1 bis 8, dadurch gekennzeichnet, daß die Trennwand wenigstens einseitig eine Noppung und/oder Rippung der Oberfläche aufweist.

10. Gummilager nach Anspruch 1 bis 9, dadurch gekennzeichnet, daß der Schnitt die Trennwand schräg durchdringt.

## Claims

1. An elastic rubber support in which a support plate (1), a spring element (2) of annular form and a base plate (3) enclose a working chamber (8) which is filled with a hydraulic fluid and is connected to a fluidfilled equalising chamber (9) changeable in volume by a throttle opening (6), through which fluid flows optimally at a defined pressure, and in which a dividing wall (11) made of a soft-elastic material and having partial areas which can move independently of one another between grids (20) is provided between the two chambers, characterised in that fluid cannot flow around the dividing wall (11) to any considerable extent if at all, that a perforation is provided from at least one cut (14) which cuts through the dividing wall without or with minimum material removal and that the cut is of such a size that, when a certain pressure is exceeded, an elastic expansion results which stabilises this pressure and causes a gap to form.

2. A rubber support according to claim 1, characterised in that the cut runs parallel to the periphery of the dividing wall.

3. A rubber support according to claim 1, characterised in that the cut is formed in a straight line.

4. A rubber support according to claim 1, characterised in that the cut is formed in a spiral line.

5. A rubber support according to any of claims 1 to 4, characterised in that the ratio between the size of the surface areas located opposite one another on both sides of the cut is from 1.1:1 to 6:1.

6. A rubber support according to any of claims 1 to 5, characterised in that the ratio between the spacing of the grids and the thickness of the dividing wall is from 1.2:1 to 1.8:1.

7. A rubber support according to any of claims 1 to 6, characterised in that the cut is predominantly allocated to the grid openings.

8. A rubber support according to any of claims 1 to 7, characterised in that the grid openings of the two grids are of different size.

9. A rubber support according to any of claims 1 to 8, characterised in that the dividing wall has knobs and/or ribs at least on one side of the surface.

10. A rubber support according to any of claims 1 to 9, characterised in that the cut penetrates through the dividing wall at an oblique angle.

## Revendications

1. Support élastique en caoutchouc, dans lequel une plaque de support (1), un élément élastique de forme annulaire (2) et une plaque de base (3) délimitent une enceinte de travail (8) remplie de liquide hydraulique, qui est reliée à une enceinte d'équilibrage (9) à volume variable et remplie de liquide par une ouverture de réglage (6), par laquelle passe un débit optimal sous une pression déterminée, et dans lequel une paroi séparatrice (11) en matériau souple et élastique, présentant des parties mobiles indépendamment l'une de l'autre, est prévue entre deux grillages (20) situés entre les deux enceintes, caractérisé en ce que la paroi séparatrice (11) n'est pas contournable, ou du moins pas dans une mesure notable, en ce qu'une percée constituée par au moins une coupure (14), traversant la paroi séparatrice sans enlèvement de matière ou avec un enlèvement minime, est prévue et en ce que la coupure est dimensionnée de manière à ce que, en cas de dépassement de la pression déterminée, il en résulte un élargissement élastique, stabilisant cette pression et constituant une fente.

2. Support en caoutchouc selon la revendication 1, caractérisé en ce que la coupure est disposée parallèlement à la périphérie de la paroi séparatrice.

3. Support en caoutchouc selon la revendication 1, caractérisé en ce que la coupure est disposée en ligne droite.

4. Support en caoutchouc selon la revendication 1, caractérisé en ce que la coupure est disposée en spirale.

5. Support en caoutchouc selon les revendications 1 à 4, caractérisé en ce que le rapport des surfaces des deux zones situées de part et d'autre de la coupure est compris entre 1,1 et 6.

6. Support en caoutchouc selon les revendications 1 à 5, caractérisé en ce que le rapport de la distance entre les grillages et l'épaisseur de la paroi séparatrice est compris entre 1,2 et 1,8.

7. Support en caoutchouc selon les revendications 1 à 6, caractérisé en ce que la coupure correspond essentiellement aux ouvertures des grillages.

8. Support en caoutchouc selon les revendications 1 à 7, caractérisé en ce que les ouvertures des deux grillages sont de grandeur différente.

9. Support en caoutchouc selon les revendications 1 à 8, caractérisé en ce que la paroi séparatrice présente, au moins d'un côté, un noppage et/ou un nervurage de la surface.

10. Support en caoutchouc selon les revendications 1 à 9, caractérisé en ce que la coupure traverse la paroi séparatrice en oblique.

Fig.1

0 098 331

Fig. 2

Fig. 3

Fig. 4

3

0 098 331

Fig. 5

18

Fig. 6

18

Fig. 7

0 098 331

Fig. 8

0 098 331